(19) Europäisches Patentamt
European Patent Office
Office européen des brevets

(11) **EP 4 414 913 A1**

(12) **EUROPEAN PATENT APPLICATION**

(43) Date of publication:
**14.08.2024 Bulletin 2024/33**

(21) Application number: **24153649.9**

(22) Date of filing: **24.01.2024**

(51) International Patent Classification (IPC):
**G06Q 10/0631** (2023.01)    **G06Q 10/0633** (2023.01)
**G06Q 10/0639** (2023.01)

(52) Cooperative Patent Classification (CPC):
**G06Q 10/06398; G06Q 10/063114;
G06Q 10/06316; G06Q 10/0633; G06Q 10/0639**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2023 JP 2023017876**

(71) Applicant: **OMRON Corporation
Kyoto-shi, Kyoto 600-8530 (JP)**

(72) Inventors:
• **FUJIMOTO, Shinya
Kyoto, 600-8530 (JP)**
• **EBISUNO, Soichi
Kyoto, 600-8530 (JP)**

(74) Representative: **Isarpatent
Patent- und Rechtsanwälte
Barth Hassa Peckmann & Partner mbB
Friedrichstraße 31
80801 München (DE)**

(54) **TASK ANALYSIS DEVICE, TASK ANALYSIS SYSTEM, TASK ANALYSIS METHOD, AND PROGRAM**

(57) To provide a technique that enables task analysis using moving image data obtained by capturing a task having a cyclic pattern to be accurately performed at low cost.

A task analysis device (10) configured to analyze a task of a worker who performs a process including a plurality of the tasks, the task analysis device including an estimator (101) configured to identify a base point of a cycle of the task in moving image data obtained by capturing the task performed by the worker, by using signal information related to a progress of the task other than the moving image data, and to estimate a breakdown of the task within the cycle.

FIG. 1

**Description**

FIELD

The present invention relates to a task analysis device, a task analysis system, a task analysis method, and a program.

BACKGROUND

Conventionally, it is known a technique of acquiring time-series data (for example, moving image data) regarding a task performed by a worker and analyzing the content of the task performed by the worker on the basis of the obtained data (for example, calculating a time required for each task included in a process). In addition, Japanese Unexamined Patent Publication No. 2021-18753 discloses a technique of estimating which one of walking, assembly, and the like corresponds to a task performed by a worker on the basis of information of an acceleration sensor attached to the worker, and calculating the reliability of the estimation result. Japanese Unexamined Patent Publication No. 2021-18753 proposes that moving image data obtained by capturing moving image of the worker is divided for each task content estimated in time series, and in a case where the reliability of the estimation result is equal to or less than a threshold, a user can visually confirm the moving image data of only a portion related to the task.

SUMMARY

Incidentally, in the case of analyzing the task content of the worker on the basis of the moving image data, for example, in a case where the task has a strong cyclic pattern such as product assembly task in a workplace, it is important to appropriately recognize a start time point and an end time point of the task in the moving image. This is because if the start point (and the end point) of the task cycle (hereinafter, one unit of a predetermined series of task is also referred to as a "process") in the moving image data is not correctly recognized, each task included in a process of one cycle to the moving image data is not correctly allocated. However, there has been a problem that, in a case where a human performs a task, it is inevitable that various irregular tasks and individual differences occur even in a task having a cyclic pattern, and in order to perform analysis using a learned model (so-called artificial intelligence (AI)) generated by machine learning, annotation by human hands cannot be avoided and the cost therefor increases.
An aspect of the present invention has been made in view of the above circumstances, and an object of the present invention is to provide a technique that enables task analysis using moving image data obtained by capturing a task having a cyclic pattern to be accurately performed at low cost.
In order to solve the above problem, a task analysis device according to an aspect of the present invention adopts the following configuration. That is,

a task analysis device configured to analyze a task of a worker who performs a process including a plurality of the tasks, the task analysis device including
an estimator configured to identify a base point of a cycle of the task in moving image data obtained by capturing the task performed by the worker, by using signal information related to a progress of the task other than the moving image data, and to estimate a breakdown of the task within the cycle.

Here, "the signal information related to the progress of the task other than the moving image data" can be, for example, an output signal of a sensor that detects that a component related to assembly has been taken out of a predetermined stocker or that a product that has been assembled has been housed in a housing case, or the like. In addition, a switch may be brought into contact with the worker each time the worker finishes one cycle of task, and an output signal from the switch may be used. Furthermore, in a case where the task is not only a manual task but also a task using a processing device, a start button pressing signal of the processing device or a drive signal from a programmable logic computer (PLC) that controls the processing device may be used. In addition, "the breakdown of the task" not only simply indicates the content of the task actually performed within the cycle, but also includes a breakdown of the time required to perform each task.
According to the above configuration, it is possible to identify the base point (start point and/or end point) of one cycle of task by using a signal substantially associated with a predetermined task, to accurately recognize the range of one cycle, and then to analyze the moving image data. Therefore, highly accurate analysis can be performed without having large-scale annotation manually performed.
Note that the estimator may estimate the breakdown of the task within the cycle by dividing the moving image data within the cycle according to the task, the cycle being determined on the basis of the identified base point. Specifically, for example, each task included in the process of one cycle may be allocated to the identified moving image data for each cycle according to the order of the task (moving image data for one cycle is divided in units of task).

Furthermore, the estimator may estimate the breakdown of the task within the cycle by classifying a pieces of partial data constituting the moving image data according to the task. Here, "the pieces of partial data constituting the moving image data" are pieces of partial moving image data or pieces of still image data in units of one frame constituting the moving image data. Specifically, for example, a machine-learned classification model may be used to perform classification as to which of the tasks included in the process of one cycle the partial data corresponds on the basis of a feature amount of the image.

Furthermore, the estimator may calculate the required time for each task within the cycle by adding together the pieces of partial data belonging to the same classification within the cycle. In a case where a motion not related to a certain task is performed in the middle of the task within the cycle, an irregular situation possibly occurs in which the same task within the cycle is recognized in the divided manner. Normally, in such a case, the analysis accuracy of the task in the cycle is lowered. However, by adding the time of the tasks in the same classification in the cycle (regardless of the order of the task) and causing the time to be recognized as a group for each classification of task, even if there is irregularity, the time required for each process in a certain cycle can be accurately calculated.

The task analysis device may further include a determiner configured to determine whether or not a time required from the base point of one of the cycle to the base point of next one of the cycle in the moving image data exceeds a predetermined value. For example, there is a possibility that the required time from the start point to the end point of a certain cycle during the task greatly exceeds the average time required for one cycle for some reason. However, even if the breakdown of the cycle in which the required time has become long due to such an irregular circumstance is analyzed, data will not become valid data that can be statistically used. Therefore, as described above, in a case where the required time from the start point to the end point of a certain cycle exceeds a predetermined threshold, an appropriate measure such as excluding the time from a statistical processing target can be taken by making the fact of this exceeding distinguishable.

Furthermore, the estimator may identify the base point by further using task procedure information indicating a progress procedure of the task. For example, it is highly conceivable that the timing at which the signal information can be acquired is not the start point or the end point of a certain process but the middle of the process. In this case, if the base point of the cycle is set only on the basis of the signal information, the cycle and the next cycle in the same process become mixed, and appropriate task analysis cannot be performed. Therefore, the task within the cycle can be appropriately analyzed by acquiring information such as a timing of acquiring the signal information belongs to which time point in the cycle for the event of the task, from the task instruction or the like, and identifying the cycle or the start (end) time point of the task as the base point by using this information and the signal information.

In addition, the task analysis device may further include a display configured to be able to display a user confirmation screen indicating a thumbnail image indicating the content of the task of at least one cycle of the moving image data and an object indicating a time point identified on the basis of the signal information along the same time series as the thumbnail image. According to such a configuration, the user can confirm whether or not the base point of the task cycle has been correctly identified by confirming the object (such as an arrow, a line segment, a balloon) indicating the base point displayed together with the thumbnail image. Note that the thumbnail image on the user confirmation screen may reflect the result of the estimation of the breakdown of the task, and for example, the thumbnail image may be displayed in a form that enables the fact of which image belongs to which task can be visually recognized.

Furthermore, the task analysis device may further include a parameter updater configured to receive an operation of correcting the position of the base point indicated on the user confirmation screen through an operation unit configured to receive a user operation, and updates a parameter related to the estimation processing of the estimator on the basis of information of the corrected base point. Specifically, the parameter relating to the estimation processing can be updated by using the corrected information on the position of the base point as the correct answer annotation data.

Furthermore, in a case where the parameter is updated, the estimator may re-estimate the breakdown of the process within the cycle on the basis of the updated parameter, and the display may display the breakdown that is re-estimated and the user confirmation screen updated according to the re-estimation.

Furthermore, the estimator may include an inference model, and the task analysis device may further include a label generator configured to generate a correct answer label for learning of the inference model on the basis of a feature amount obtained from the thumbnail image corresponding to the position of the base point estimated by the estimator or the position of the base point corrected through the operation unit. In addition, the task analysis device may further include an inference model generator configured to perform learning of the inference model on the basis of the correct answer label.

The present invention can also be regarded as the following task analysis system. That is,

a task analysis system configured to analyze a task of a worker who performs a process including a plurality of the tasks, the task analysis system including
an estimation unit configured to identify a base point of a cycle of the task in moving image data obtained by capturing the task performed by the worker, by using signal information related to a progress of the task other than the moving image data, and to estimate a breakdown of the task within the cycle.

Furthermore, the present invention can also be regarded as the following task analysis method. That is,

a task analysis method configured to analyze a task of a worker who performs a process including a plurality of the tasks, the task analysis method including
an estimation step of identifying a base point of a cycle of the task in moving image data obtained by capturing the task performed by the worker, by using signal information related to a progress of the task other than the moving image data, and estimating a breakdown of the task within the cycle.

Further, the present invention can also be regarded as a program configured to cause a computer to function as the estimation unit in the task analysis system described above, and as a computer-readable recording medium in which such a program is non-transiently recorded.

According to the present invention, the task analysis using moving image data obtained by capturing the task having a cyclic pattern can be accurately performed at low cost.

BRIEF DESCRIPTION OF THE DRAWINGS

Fig. 1 is a schematic diagram schematically illustrating a work site to which a task analysis device according to a first embodiment is applied;
Fig. 2 is a functional block diagram illustrating a functional configuration of the task analysis device according to the first embodiment;
Fig. 3 is a flowchart illustrating an example of processing performed in the task analysis device according to the first embodiment;
Fig. 4 is an example of a user confirmation screen displayed in the task analysis device according to the first embodiment;
Fig. 5 is a diagram illustrating an image at the time of identifying a cycle of moving image data and allocating tasks on the basis of a feature amount in the task analysis device according to the first embodiment;
Fig. 6A is a first explanatory diagram related to identification of a timing of acquiring signal information and a task start time point in the task analysis device according to the first embodiment;
Fig. 6B is a second explanatory diagram related to identification of the timing of acquiring the signal information and the task start time point in the task analysis device according to the first embodiment;
Fig. 6C is a third explanatory diagram related to identification of the timing of acquiring the signal information and the task start time point in the task analysis device according to the first embodiment;
Fig. 7 is a fourth explanatory diagram related to identification of the timing of acquiring the signal information and the task start time point in the task analysis device according to the first embodiment;
Fig. 8 is an explanatory diagram related to identification of the task start time point in a case where an annotation is added;
Fig. 9 is an explanatory diagram illustrating an image of how to classify a task breakdown within a cycle according to a modification of the first embodiment; and
Fig. 10 is a block diagram illustrating a configuration of a task analysis system according to a second embodiment.

DETAILED DESCRIPTION

<Application example>

(Configuration of application example)

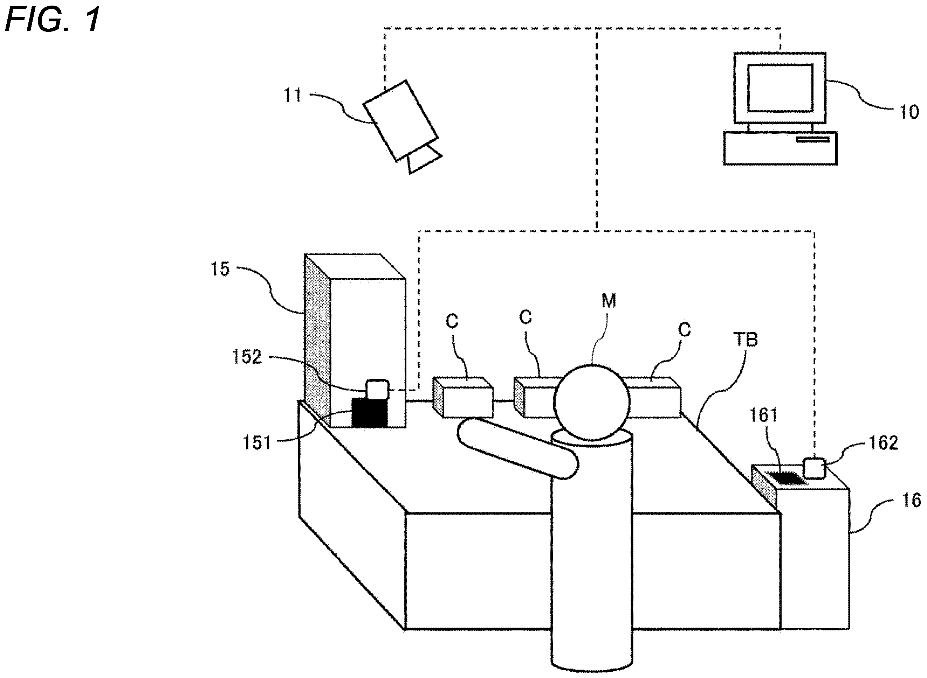

Hereinafter, an example of an embodiment of the present invention is described. The present invention can be applied to, for example, a task analysis device 10 as illustrated in Fig. 1. Fig. 1 is a schematic diagram schematically illustrating a work site to which a task analysis device 10 is applied.

As illustrated in Fig. 1, the task analysis device 10 is, for example, an information processing terminal used in a factory where a product assembly task is performed, and can be constituted of a general-purpose computer including a processor, a storage unit, an input unit such as a keyboard, a display unit such as a liquid crystal display, a communication unit, and the like. Furthermore, the task analysis device 10 may include a single computer or may include two or more computers that cooperate with each other. Note that the task analysis device 10 does not necessarily need to be installed at a site where the assembly task is performed, and may be installed anywhere as long as necessary information can be acquired via a communication network.

At a work site illustrated in Fig. 1, a worker M stands in front of a work table TB and repeats a series of assembly tasks including a plurality of predetermined tasks many times. That is, the worker performs a series of assembly task in cycles. Note that, hereinafter, one unit of a process including the plurality of predetermined tasks is also referred to as one cycle. Then, the manner of the task being performed by the worker is continuously captured by a camera 11, and the captured moving image is transmitted to the task analysis device 10. Note that the camera 11 may include a timing unit, and time information may be assigned to the captured moving image data.

Here, the flow of tasks performed by the worker M is as follows. First, the worker M takes out a case member serving as a casing of the product from a take-out port 151 of a first stocker 15. A start sensor 152 is provided in the vicinity of the take-out port 151. The start sensor 152 can be, for example, a photoelectric sensor or the like, and detects that the case member is taken out from the take-out port 151 by the worker M. Specifically, for example, in a case where the start sensor 152 is a photoelectric sensor, the sensor detects that the hand of the worker M or the case member has passed through the take-out port 151, and a signal thereof is transmitted to the task analysis device 10.

Thereafter, the worker M takes out a component from a component case C in which the plurality of components are housed for each component type, performs a task of assembling each component in the case member, and closes the case member after all the components are assembled. When the completed product is ready in this way, the worker M houses the completed product in a housing case 16 from a housing port 161 of the housing case 16, and ends one cycle of task. Note that an end sensor 162 is provided in the vicinity of the housing port 161 of the housing case 16. The end sensor 162 can also be, for example, a photoelectric sensor, and detects that the completed product is housed in the housing case 16 by the worker M and transmits a signal thereof to the task analysis device 10.

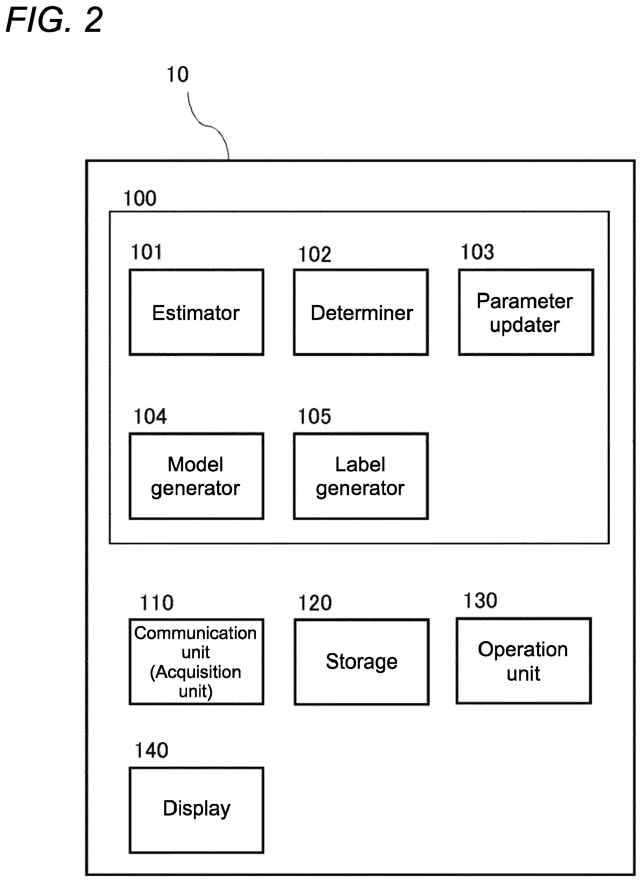

Fig. 2 is a functional block diagram illustrating a functional configuration of the task analysis device 10. The task analysis device 10 receives the moving image data transmitted from the camera 11 and the detection signals acquired from the start sensor 152 and the end sensor 162 via a communication unit 110. These pieces of data received by the communication unit 110 are stored in a storage 120 in association with the reception time. Note that, in the present application example, the detection signals acquired from the start sensor 152 and the end sensor 162 correspond to the signal information of the present invention.

As illustrated in Fig. 2, the task analysis device 10 includes an estimator 101 as a functional module of a controller 100, and the estimator 101 performs processing of estimating the breakdown of the task of the worker M for each cycle on the basis of the moving image data and the signal information acquired via the communication unit 110. Specifically, the estimator 101 identifies a process start point in the moving image data on the basis of the signal information (more specifically, information of the time when the signal is obtained) acquired from the start sensor 152. Furthermore, the estimator 101 identifies a process end point in the moving image data on the basis of the signal information (more specifically, information of the time when the signal is obtained) acquired from the end sensor 162.

Then, the estimator 101 performs processing of allocating to which task the task (including a motion not related to the task) performed by the worker M in the moving image data within one cycle between the identified process start point and process end point belongs, and calculates the time required for the task for each task. Note that, at this time, the estimator 101 may obtain the time required for each task by dividing the time within one cycle of the moving image data in order from the process start point according to the order of tasks in the process. Alternatively, the time required for each task may be obtained by classifying the still image of each frame included in the moving image data into process that the still image belongs, and then adding the still images classified in the same classification.

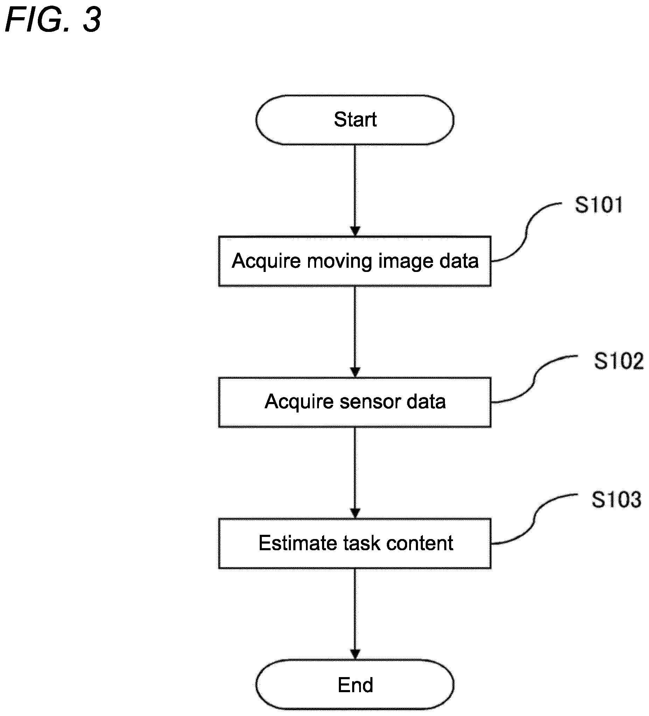

Here, an outline of a flow of processing performed by the task analysis device 10 according to the present application example is described with reference to Fig. 3. Fig. 3 is a flowchart illustrating an example of processing performed in the task analysis device 10 according to the application example. As illustrated in Fig. 3, first, the task analysis device 10 acquires the moving image data captured by the camera 11 via the communication unit 110 (S101), and in parallel with this, acquires the signal information output from the start sensor 152 and the end sensor 162 (S102). Then, the task analysis device 10 (estimator 101) identifies the start point and the end point of the cycle in the moving image data acquired in step S102 on the basis of the signal information acquired in step S101 as described above, performs the processing of estimating the breakdown of the task performed by the worker M within each cycle the range of which is determined by the start point and the end point (S103), and ends the series of processing. Note that the processing of step S103 does not need to be performed with temporal continuity with steps S101 and S102, and may be performed several days after the execution of steps S101 and S102 by using data stored in the storage 120 or the like.

According to the task analysis device 10 according to the present application example as described above, the time required for the worker M to perform each task can be grasped and the grasped information can be utilized for business improvement at the manufacturing site. In addition, according to the task analysis device 10 according to the present application example, after the base point of the process including the plurality of tasks is identified and the moving image data is divided into a time zone for each cycle, the process in the one cycle can be allocated for each task. Therefore, the task analysis can be highly accurately performed while the labor of annotation by human hands is greatly reduced.

<First embodiment>

Next, an example of the embodiment of the present invention is described in more detail. Note that the task analysis device 10 according to the present embodiment has the same configuration as that described in the application example, and the repeated description of the configuration already described is omitted. However, in the description of the task analysis device 10 according to the present embodiment, a case of being used at a work site different from the application example will also be described.

(Configuration of task analysis device)

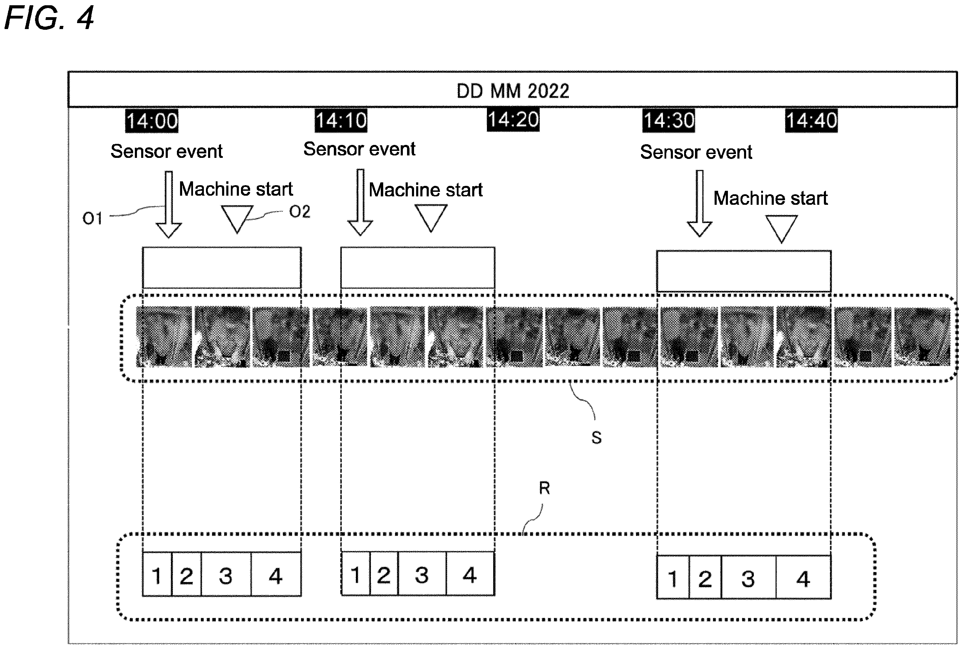

As illustrated in Fig. 2, the task analysis device 10 includes functional units, which are a controller 100, a communication unit 110, a storage 120, an operation unit 130, and a display 140.
The controller 100 is an arithmetic device that controls the entire task analysis device 10. The controller 100 includes, for example, one or more processors (for example, a central processing unit (CPU) and the like), and can realize a functional module serving a predetermined purpose as described later by executing a program stored in one or more memories (for example, a random access memory (RAM), a read only memory (ROM), and the like).
The communication unit 110 performs wired communication or wireless communication with devices such as a camera 11, a start sensor 152, and an end sensor 162 via a network, and executes data transmission and reception. The communication unit 110 includes, for example, an integrated circuit such as a communication integrated circuit (IC).
The storage 120 stores various types of data used by the controller 100 and various types of software executed by the controller 100. In addition, the storage 120 stores data acquired from the camera 11, the start sensor 152, and the end sensor 162 via the communication unit 110, an inference model generated by a model generator 104 to be described later, a correct answer label used for learning of the inference model, and the like.
The operation unit 130 includes a general-purpose input unit such as a mouse, a keyboard, and a touch panel, and receives an operation input from a user.
The display 140 includes a general-purpose display unit such as a liquid crystal display, and can display, for example, a user confirmation screen as illustrated in Fig. 4, a graph obtained by statistically processing an estimation result by an estimator 101, and the like. Note that, the user confirmation screen displays at least a thumbnail image S indicating the content of task of at least one cycle of the moving image data acquired via the communication unit 110, and objects O1 and O2 each indicating, along the same time series as the thumbnail image, a time point identified on the basis of the signal information acquired via the communication unit 110. These will be described later.
The controller 100 includes functional modules, which are the estimator 101, a determiner 102, a parameter updater 103, a model generator 104, and a label generator 105.

(Estimator)

As described in the application example, the estimator 101 performs processing of estimating the breakdown of the task of the worker M on the basis of the moving image data and the signal information acquired via the communication unit 110. That is, in the case of being used in the similar environment as the application example, the estimator 101 identifies a process start point in the moving image data on the basis of the signal information (more specifically, information of the time when the signal is obtained) acquired from the start sensor 152. Furthermore, the estimator 101 identifies a process end point in the moving image data on the basis of the signal information (more specifically, information of the time when the signal is obtained) acquired from the end sensor 162.
Note that, even if there is no signal information indicating the process start point and the process end point, the breakdown of the task can be estimated only from the moving image data obtained by capturing the manner of the task being performed by the worker. For example, the user can perform annotation for each task on the moving image data for one cycle, compare a feature amount extracted from the annotated "correct answer" data and a feature amount extracted from the moving image to be analyzed by a dynamic time warping (DTW) method, and divide the moving image for one cycle into each task. Note that the feature amount can be, for example, a motion feature amount obtained by estimating the posture of the worker in the moving image data, converting the estimated posture into a skeleton sequence, and further converting the skeleton sequence into a motion vector.
However, in order to estimate the breakdown of the task for one cycle by such a method, in order to perform comparison with the correct answer data for one cycle, an individual cycle (the start point and the end point of) needs to be identified from the moving image data in which processes for many cycles are captured. If this individual cycle is not appropriately identified, matching by the DTW method does not function correctly (that is, the estimation accuracy is greatly reduced). However, the individual cycle is difficult to be identified only on the basis of the feature amount obtained from the moving image data, due to various irregularities occurring during the task, errors due to individual differences for each worker M, and the like.

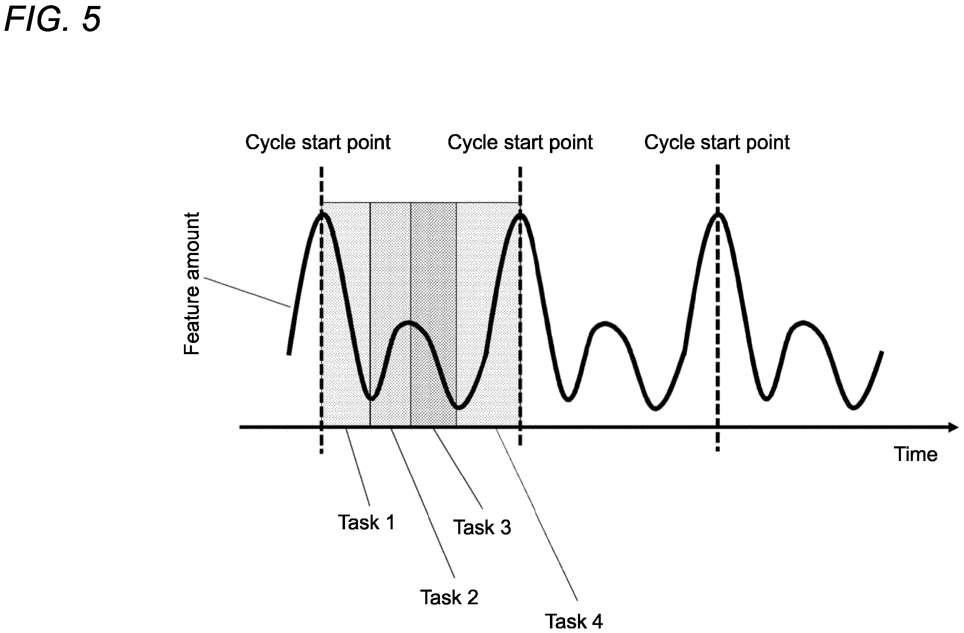

In this regard, in the task analysis device 10 according to the present embodiment, because the estimator 101 identifies the start point and the end point of the task in the moving image data on the basis of the signal information indicating the process start point and the process end point, the accuracy of identifying the individual cycle from the moving image data can be greatly improved. Then, by matching the feature amount of each cycle identified in this way with the feature amount of the correct answer data by the DTW method, the task within the cycle can be appropriately analyzed. Fig. 5 illustrates an image diagram at the time of identifying the cycle of the moving image data and allocating the task performed in this manner.

Note that, in the above-described application example, the start sensor 152 and the end sensor 162 are provided, and the start time point and the end time point of each cycle can be identified by obtaining these two sensor signals. However, the estimator 101 can also identify the start and the end of the cycle on the basis of signal information different from that in such an application example.

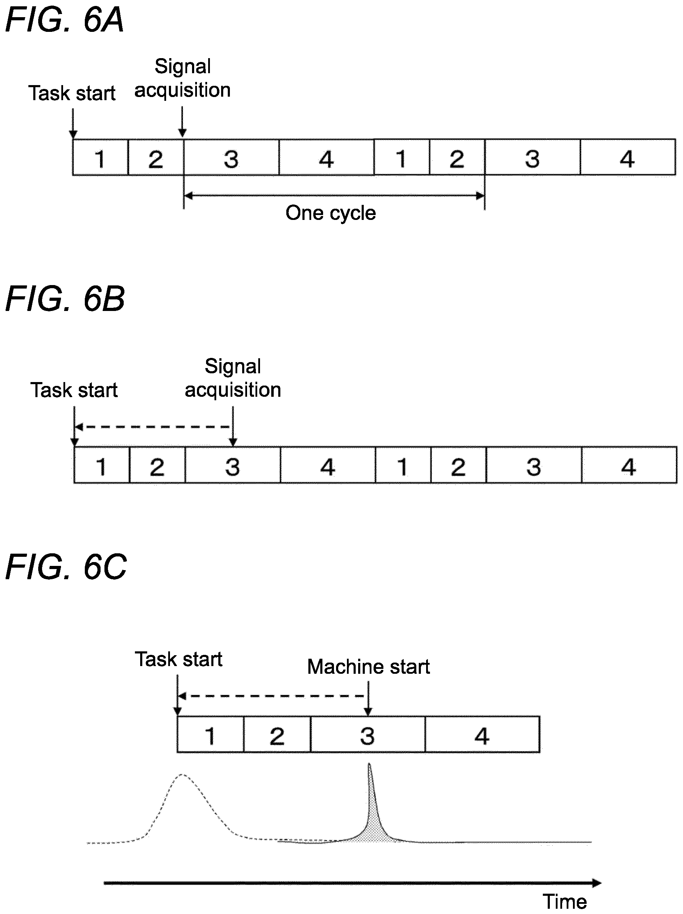

Specifically, even in a case where signal information regarding the progress of the task is acquired in the middle of one cycle instead of the timing of the start or the end of one cycle, the start or the end of one cycle can be identified. Figs. 6A to 6C illustrate examples of such a case.

Fig. 6A illustrates an example of a case where the signal information is acquired at the start of a task (third task) in the middle of a product assembly process. For example, in a case where a task of fitting the cover to the case after assembling the component is set as the third task, a case can be assumed where the sensor is disposed in the stocker in which the cover is housed. In such a case, the estimator 101 identifies the start point and the end point of one cycle by setting the third task as the start point of one cycle and immediately before the start of the third task being the next product assembly task as the end point of one cycle. In this case, although the cycle of the actual assembly process and the cycle identified by the estimator 101 are not synchronized with each other, the breakdown of the task included for one cycle is the same, and thus, it does not become a large problem for the analysis of the task content.

Fig. 6B illustrates an example of a case where the signal information is acquired in the middle of the product assembly task. For example, assuming a case where the task using a processing device is performed in the middle of the third task, the signal information acquired by the task analysis device 10 via the communication unit 110 can be information on pressing of a start button of the processing device. Note that the timing of pressing the start button is also referred to as a machine start time point.

As illustrated in Fig. 6B, the signal information acquisition timing indicating the machine start time point does not coincide with the start timing of any of the tasks. In such a case, for example, if the time point of the timing of acquiring the signal information as to how many seconds has elapsed from the start point of the cycle can be identified, from information such as a task instruction indicating a task progress procedure, a rough required time, and the like, the start time point of the cycle can be identified on the basis of the acquisition timing of the signal information by performing calibration such as subtracting the elapsed time.

Specifically, first, the time from the machine start time point to the first task start time point (that is, the process start point) is obtained. That is, how many seconds after the start of the task the processing device is to be started is obtained by using information such as the task instruction. Next, calculation for estimating the task start time point is performed on the basis of the time obtained as described above and the time indicated by the signal information indicating the machine start time point. However, even if the time from the task start to the machine start time point can be identified by the information of the task instruction, the task actually performed by the worker M does not completely coincide with this, and includes a certain error. That is, the start time point of the cycle obtained from the information of the task instruction and the signal information that can be acquired in the middle of the task has a certain degree of dispersion with respect to the actual task start time point of the worker M.

Fig. 6C is an explanatory diagram for explaining an establishment distribution in a case where the task start time point of one cycle is obtained on the basis of the signal information at the machine start time point. In Fig. 6C, a shaded solid-line graph indicates the establishment distribution (likelihood) of the timing at the machine start time point based on the signal information acquisition. Because the signal is acquired with pressing of the start button of the processing device, the dispersion of the machine start time point obtained from the signal is small.

On the other hand, in Fig. 6C, a graph indicated by a broken line is a graph indicating the likelihood for the task start time point obtained from the timing of acquiring the signal information of the machine start and the description content of the task instruction. Because the worker M cannot perform the task completely in the required time according to the task instruction, the dispersion becomes larger than that at the machine start time point. In addition, the dispersion increases as the machine start time point and the task start time point are separated from each other. Therefore, the "task start time point" does not need to be the start time point of the first task in the process, and may be the start point of the task having a small deviation from the machine start time point. Note that the probability function $StartP(start_t)$ at the task start time point can be obtained by the following formula (1).

[Mathematical Formula 1]

$$StartP(start_t) = \frac{1}{\sqrt{2\pi\sigma^2}} exp(-\frac{(start_t - start_u)^2}{2\sigma^2}) \quad \cdots(1)$$

Here, $start_u$ = MachineTime - StartTime is the average of the process start points, and $\sigma = Tu^2$ (T is a constant).

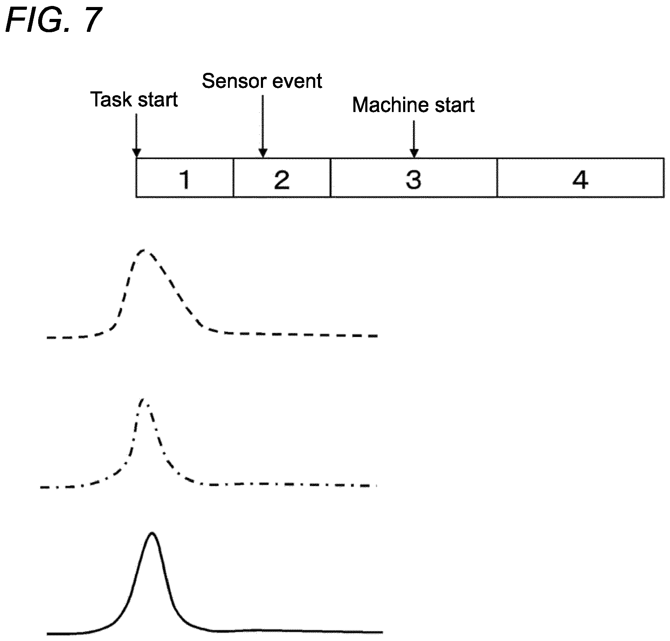

Note that, in the above description, the signal information acquired by the task analysis device 10 is only the information indicating the machine start time point, but other signal information may be further acquired. For example, signal information of a sensor that detects pickup of a component may be acquired in the middle of the second process. Fig. 7 is an explanatory diagram illustrating a case where the start time point of the cycle is identified in a case where not only the signal information indicating the machine start time point but also the signal information indicating the timing of the event detected by the sensor is acquired. A graph indicated by a broken line in Fig. 7 is a graph indicating the likelihood at the machine start time point and the task start time point obtained from the information of the task instruction. On the other hand, a graph indicated by a one-dot chain line in Fig. 7 is a graph indicating the likelihood at the task start time point obtained from the time information at the time of sensor event occurrence and the information of the task instruction. Because the time point of the sensor event is closer to the task start time point than the machine start time point, the graph of the likelihood obtained by using the information of the sensor event has a smaller dispersion than the graph of the likelihood obtained by using the machine start time point. Further, in Fig. 7, a graph indicated by a solid line is a graph indicating the likelihood obtained by the discrete Bayesian filtering technique using the likelihood obtained by using the machine start time point and the likelihood obtained by using the information on the sensor event.

The estimator 101 identifies a time point at which the likelihood obtained by the discrete Bayesian filtering method is the highest as the start time point of one cycle as described above. By repeating this process for the pieces of acquired signal information, the start time point of each cycle in the moving image data can be continuously identified. Note that, for example, in a case where the peak of the likelihood is below a predetermined threshold, the estimator 101 does not need to identify the start point for the cycle.

The breakdown of each task performed within the cycle by the estimator 101 may be displayed, for example, on a user confirmation screen as illustrated in Fig. 4. In the example of the user screen illustrated in Fig. 4, the process of one cycle identified from the moving image data is divided into four, and a breakdown estimation result field R visually indicating the time required for each of the first to fourth tasks is displayed at the bottom of the screen.

(Determiner)

The determiner 102 determines whether or not the required time (that is, the time required from the process start point to the process end point) of each cycle identified in the moving image data exceeds a predetermined value. For example, in a case where the worker picks up a component or a tool dropped on a floor in the middle of the task, goes to a backyard to pick up a missing component, or the like, or in a case where the signal information to be a base point cannot be appropriately acquired, there are cases, for some reason, where the required time from the start point to the end point of a certain cycle greatly exceed the average required time for one cycle. However, even if the breakdown of the cycle in which the required time has become long due to such an irregular circumstance is analyzed, data will not become valid data that can be statistically used. Therefore, in a case where the determiner 102 determines that the required time from the start point to the end point of a certain cycle exceeds the predetermined threshold, the task within the cycle can be excluded from the target of the statistical processing without being estimated by the estimator 101.

(Parameter updater)

The parameter updater 103 changes a parameter related to the estimation processing of the estimator 101 through a user input from the operation unit 130. The content of the parameter to be changed and the method of changing the parameter are not particularly limited, but for example, the parameter can be changed through the user confirmation screen displayed on the display 140. Here, a case where the parameter change for identifying the start time point of the cycle is performed through the user confirmation screen illustrated in Fig. 4 is described.

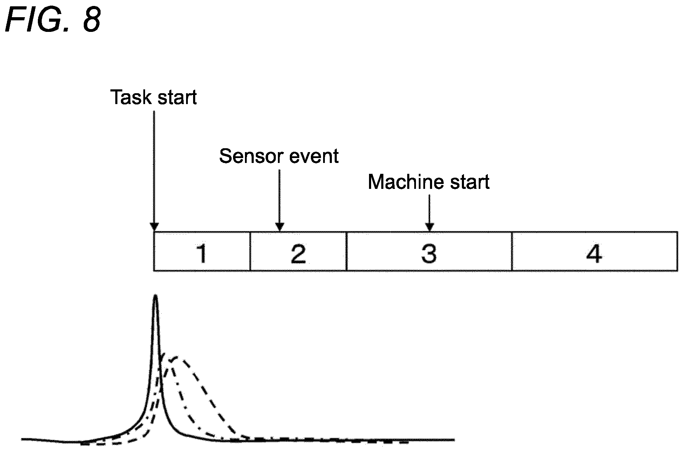

The user annotates the start point of the task on the user confirmation screen illustrated in Fig. 4. Specifically, a thumbnail image (here, for example, a left end image) in which the start point of the task is captured is selected from the plurality of thumbnail images. The selection is performed through the operation unit 130. In a case where the annotation is manually performed, the likelihood that the task start time point is at the time is extremely high. In Fig. 8, a graph of the likelihood in a case where manual annotation is performed is indicated by a solid line. Note that, in Fig. 8, a graph indicated by a broken line indicates the likelihood at the task start time point obtained from the machine start time point and the information of the task instruction, and a graph indicated by a one-dot chain line indicates the likelihood at the task start time point obtained from the time information at the time of sensor event occurrence and the information of the task instruction.

The parameter updater 103 updates the parameter $start_u$ used when the estimator 101 obtains the probability function at the task start time point, on the basis of the annotated information at the task start time point. Specifically, $start_{u'} = (StartTime_d + StartTime_h)/2$ can be set. Here, $StartTime_d$ indicates a time (-d seconds) obtained from the task instruction or the like, and $StartTime_h$ indicates a time (-h seconds) obtained by annotation performed by the user.

(Model generator)

The model generator 104 generates the inference model used in the task analysis device 10. For generation of the inference model, for example, learning using the moving image data acquired via the communication unit 110 can be performed. Furthermore, at the time of generating the inference model, any learning method such as supervised learning, unsupervised learning, and reinforcement learning can be adopted. Furthermore, in a case where the inference model is learned by the supervised learning method, learning may be performed by using a correct answer label generated by the label generator 105 described later.

Note that the inference model may be used for estimation processing by the estimator 101. Specifically, for example, at the time when the estimator 101 identifies the start time point of the cycle, the start time point of the cycle may be identified by using an inference model from which the start time point of the task is obtained from the image feature amount. In addition, the start time point of the cycle identified by using the inference model in this manner may be displayed on the user confirmation screen so that it can be recognized that the start point is identified by the inference model.

(Label generator)

The label generator 105 generates the correct answer label for learning of the inference model, on the basis of the feature amount obtained from the thumbnail image corresponding to the position at the cycle start time point estimated by the estimator 101 or the position at the cycle start time point corrected on the user confirmation screen through the operation unit 130.

According to the task analysis device 10 according to the present embodiment as described above, because the estimator 101 can identify the start point (end point) of the cycle in the moving image data on the basis of various methods, the accuracy of the cycle estimation can be increased. In addition, because the parameter update of the estimation processing, the relearning of the inference model, and the like are automatically performed only by manually performing the annotation in the minimum range from the user confirmation screen, the estimation processing can be performed with high accuracy by greatly reducing the trouble of the annotation.

(Modification)

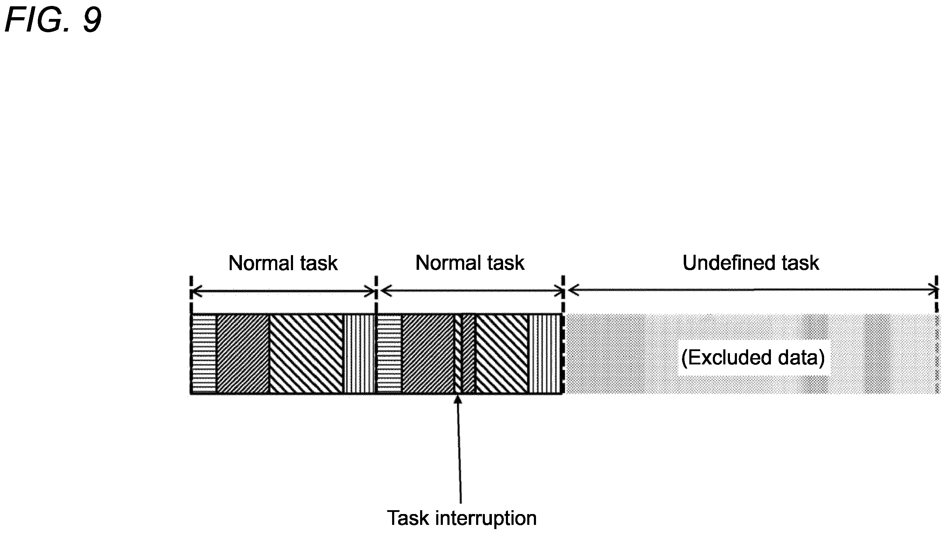

Note that, in the first embodiment described above, the estimator 101 estimates the breakdown of the task within the cycle by dividing and allocating the identified cycle in the order of the task on the basis of the feature amount obtained from the moving image data. However, the task within the cycle can be allocated by other methods. Specifically, the estimator 101 may estimate the breakdown of the task within one cycle by classifying a still image for each frame constituting the moving image data into any of the tasks by using a general classification model. Fig. 9 is an explanatory diagram in a case where the moving image data within the cycle in which the start point and the end point are identified in this manner is classified by the classification model.

As illustrated in Fig. 9, each of the still images constituting the moving image data is classified to which one of the four tasks belongs on the basis of the image feature amount. In a case where such classification is performed, as illustrated in a portion of the second cycle from the left in Fig. 9, a situation possibly occurs in which a motion classified as a different task is interrupted in the middle of a certain task within the cycle. Such an error possibly occurs when the task is interrupted, for example, when a motion (for example, a motion of picking up a dropped component, or the like) that does not belong to any of the tasks is performed in the middle of the process.

However, in a case where the breakdown of the task is estimated by classifying all the pieces of still image data in the cycle into classifications indicating any of the tasks and then adding the still images belonging to the same classification, that is, when the required time is obtained for each task in the cycle, such a classification error or unreasonable classification for a short time of task interruption becomes a slight defect that can be almost ignored from the whole. Therefore, even in a case where the breakdown of the task within the cycle is estimated regardless of the order of the task, the breakdown of the task can be accurately estimated.

Note that, in a case where a certain time point is set as the start point of the cycle, in a case where the total time exceeds a predetermined threshold as a result of adding the pieces of still image data up to the end point of the cycle, data corresponding to the cycle is excluded from the analysis target in the same manner as in the first embodiment.

<Second embodiment>

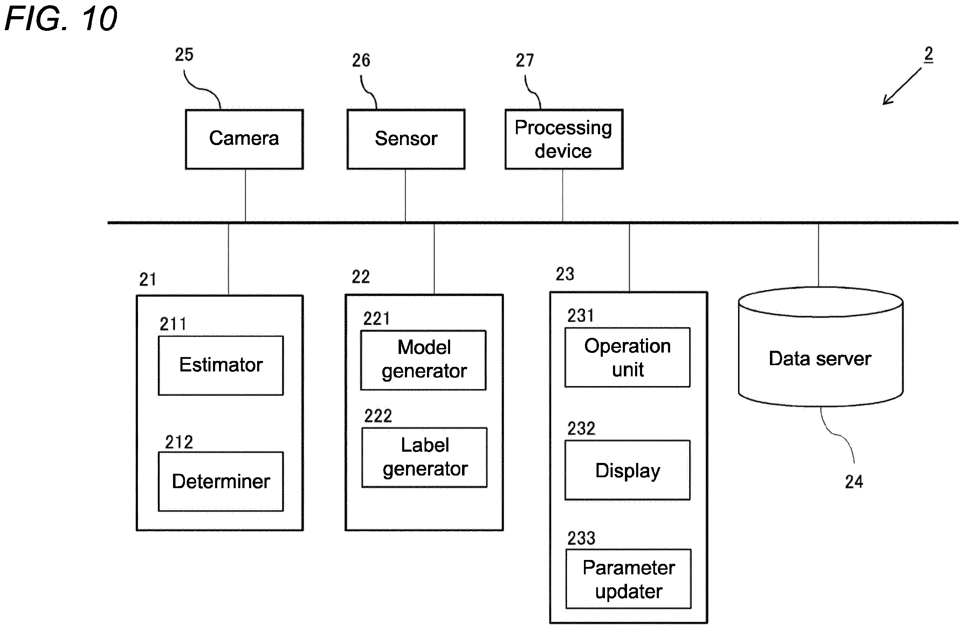

Next, another embodiment according to the present invention is described with reference to Fig. 10. Fig. 10 is a block diagram illustrating a configuration of a task analysis system 2 according to the present embodiment. As illustrated in Fig. 10, the task analysis system 2 includes a camera 25, a sensor 26, a processing device 27, an analysis terminal 21, an AI generation terminal 22, an operation terminal 23, and a data server 24, and these constituents are communicably connected via a network. The task analysis system 2 is also used to analyze the task content of a worker who performs a task having a cyclic pattern.

The camera 25 continuously captures an image of the manner of the task being performed by the worker and outputs moving image data. Each of the sensor 26 and the processing device 27 is installed at a site where each of the workers performs the task, and is configured to output signal information indicating that the worker has performed a predetermined task in the middle of a process including a plurality of tasks. Note that the output moving image data and the signal data are stored in the data server 24 via the network.

Meanwhile, the analysis terminal 21, the AI generation terminal 22, the operation terminal 23, and the data server 24 are not necessarily installed at the work site, and all or some of the constituents may be installed at a remote place. Note that each of the analysis terminal 21, the AI generation terminal 22, and the operation terminal 23 can be a general-purpose computer including a processor such as a CPU, a storage unit, an input unit such as a keyboard and a mouse, and an output unit such as a liquid crystal display (all not illustrated). Alternatively, it is naturally possible to use a dedicated terminal with limited functions.

The data server 24 can be constituted of, for example, an information processing terminal dedicated to a server, a network attachment storage (NAS), or the like, and receives and stores data transmitted from the camera 11, the sensor 12, the processing device 13, the analysis terminal 21, the AI generation terminal 22, and the operation terminal 23, and transmits the stored information to each device upon receiving requests from these devices. Specifically, the data server 24 stores, for example, various types of data used by the analysis terminal 21, the AI generation terminal 22, and the operation terminal 23, and various types of software executed by these devices. In addition, the data server 24 stores parameters for estimation processing used by the analysis terminal 21, a learned model generated by the AI generation terminal 22, teaching data for generation and relearning of the inference model, and the like.

The analysis terminal 21 includes functional units, which are an estimator 211 and a determiner 212. In addition, the AI generation terminal 22 includes functional units, which are a model generator 221 and a label generator 222. Furthermore, the operation terminal 23 includes functional units, which are an operation unit 231, a display 232, and a parameter updater 233.

Here, the functional units, which are the estimator 211, the determiner 212, the model generator 221, the label generator 222, the operation unit 231, the display 232, and the parameter updater 233, each have a configuration respectively corresponding to the estimator 101, the determiner 102, the model generator 104, the label generator 105, the operation unit 130, the display 140, and the parameter updater 103 according to the task analysis device of the first embodiment. Note that, in the present embodiment, the camera 25 and the data server 24 correspond to a moving image data acquisition unit, and the sensor 26, the processing device 27, and the data server 24 correspond to a signal information acquisition unit.

That is, the task analysis system 2 according to the present embodiment partially implements the functional units included in the task analysis device 10 according to the first embodiment as separate devices. According to such a configuration, the task analysis can be performed as a cloud system in which some functions of the task analysis device 10 are clouded according to various situations such as the environment and location of the work site and the business of the user.

<Others>

Each of the above examples is merely an illustrative description of the present invention, and the present invention is not limited to the above specific forms. The present invention can be variously modified and combined within the scope of the technical idea. For example, the display 140 of the first embodiment described above can be made to display a list of the breakdown of the tasks of a plurality of workers, or can be made to display a screen indicating statistical analysis information using data collected to some extent.

In addition, some or all of the functional units of the task analysis device 10, the analysis terminal 21, the AI generation terminal 22, and the operation terminal 23 may be realized by a hardware circuit such as an application specific integrated circuit (ASIC) or a field programmable gate array (FPGA), or may be realized by software.

**Claims**

1. A task analysis device (10) configured to analyze a task of a worker who performs a process including a plurality of the tasks, the task analysis device (10) comprising an estimator (101) configured to identify a base point of a cycle of the task in moving image data obtained by capturing the task performed by the worker, by using signal information related to a progress of the task other than the moving image data, and to estimate a breakdown of the task within the cycle.

2. The task analysis device (10) according to claim 1, wherein the estimator (101) estimates the breakdown of the task within the cycle by dividing the moving image data within the cycle according to the task, the cycle being determined on a basis of the base point that is identified.

3. The task analysis device (10) according to claim 1 or 2, wherein the estimator (101) estimates the breakdown of the task within the cycle by classifying a piece of partial data constituting the moving image data according to the task.

4. The task analysis device (10) according to claim 3, wherein the estimator (101) calculates a required time for each of the tasks within the cycle by adding together the pieces of partial data belonging to a same classification within the cycle.

5. The task analysis device (10) according to any one of claims 1 to 4, further comprising a determiner (102) configured to determine whether or not a time required from the base point of one of the cycle to the base point of next one of the cycle in the moving image data exceeds a predetermined value.

6. The task analysis device (10) according to any one of claims 1 to 5, wherein the estimator (101) identifies the base point by further using task procedure information indicating a progress procedure of the task.

7. The task analysis device (10) according to any one of claims 1 to 6, further comprising a display (140) configured to be able to display a user confirmation screen indicating a thumbnail image indicating a content of the task of at least one cycle of the moving image data and an object indicating a time point identified on a basis of the signal information along a same time series as the thumbnail image.

8. The task analysis device (10) according to claim 7, further comprising a parameter updater (103) configured to receive an operation of correcting a position of the base point indicated on the user confirmation screen through an operation unit (130) configured to receive a user operation, and updates a parameter related to estimation processing of the estimator (101) on a basis of information of the base point that is corrected.

9. The task analysis device (10) according to claim 8, wherein,

   in a case where the parameter is updated, the estimator (101) re-estimates the breakdown of the task within the cycle on a basis of the parameter that is updated, and
   the display (140) displays the breakdown of the task that is re-estimated and the user confirmation screen updated according to the re-estimation.

10. The task analysis device (10) according to claim 8 or 9, wherein the estimator (101) includes an inference model, the task analysis device (10) further comprising a label generator (105) configured to generate a correct answer label for learning of the inference model on a basis of a feature amount obtained from the thumbnail image corresponding to the position of the base point estimated by the estimator (101) or the position of the base point corrected through the operation unit (130).

11. The task analysis device (10) according to claim 10, further comprising an inference model generator (104) configured to perform learning of the inference model on a basis of the correct answer label.

12. A task analysis system (2) configured to analyze a task of a worker who performs a process including a plurality of the tasks, the task analysis system (2) comprising an estimation unit (211) configured to identify a base point of a cycle of the task in moving image data obtained by capturing the task performed by the worker, by using signal information related to a progress of the task other than the moving image data, and to estimate a breakdown of the task within the cycle.

13. A task analysis method configured to analyze a task of a worker who performs a process including a plurality of the tasks, the task analysis method comprising an estimation step (S103) of identifying a base point of a cycle of the task in moving image data obtained by capturing the task performed by the worker, by using signal information related to a progress of the task other than the moving image data, and estimating a breakdown of the task within the cycle.

14. A program configured to cause a computer to function as at least the estimation unit (211) of the task analysis system according to claim 12.

FIG. 1

EP 4 414 913 A1

# FIG. 2

10

100

101
Estimator

102
Determiner

103
Parameter updater

104
Model generator

105
Label generator

110
Communication unit (Acquisition unit)

120
Storage

130
Operation unit

140
Display

*FIG. 3*

```
              ┌─────────────────┐
              │      Start       │
              └─────────────────┘
                       │
                       ▼
        ┌──────────────────────────────┐        S101
        │  Acquire moving image data    │
        └──────────────────────────────┘
                       │
                       ▼
        ┌──────────────────────────────┐        S102
        │       Acquire sensor data     │
        └──────────────────────────────┘
                       │
                       ▼
        ┌──────────────────────────────┐        S103
        │      Estimate task content    │
        └──────────────────────────────┘
                       │
                       ▼
              ┌─────────────────┐
              │       End        │
              └─────────────────┘
```

## FIG. 4

EP 4 414 913 A1

FIG. 5

## FIG. 6A

Task start · Signal acquisition

| 1 | 2 | 3 | 4 | 1 | 2 | 3 | 4 |

One cycle

## FIG. 6B

Task start · Signal acquisition

| 1 | 2 | 3 | 4 | 1 | 2 | 3 | 4 |

## FIG. 6C

Task start · Machine start

| 1 | 2 | 3 | 4 |

Time

## FIG. 7

FIG. 8

Task start

Sensor event

Machine start

| 1 | 2 | 3 | 4 |

# FIG. 9

Normal task | Normal task | Undefined task

(Excluded data)

Task interruption

EP 4 414 913 A1

# FIG. 10

EP 4 414 913 A1

Europäisches Patentamt
European Patent Office
Office européen des brevets

# EUROPEAN SEARCH REPORT

Application Number

EP 24 15 3649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/031390 A1 (SERIZAWA YASUTAKA [US] ET AL) 2 February 2023 (2023-02-02)<br>* paragraph [0007] *<br>* paragraph [0027] – paragraph [0029] *<br>* paragraph [0031] – paragraph [0036] *<br>* paragraph [0044] – paragraph [0045] *<br>* paragraph [0051] *<br>* figures 6, 7, 9(A), 9(B), 10 * | 1-14 | INV.<br>G06Q10/0631<br>G06Q10/0633<br>G06Q10/0639 |
| X | US 2021/110348 A1 (SUZUKI KENJI [JP]) 15 April 2021 (2021-04-15)<br>* paragraph [0050] – paragraph [0051] *<br>* paragraph [0064] – paragraph [0068] *<br>* paragraph [0085] – paragraph [0086] *<br>* paragraph [0094] – paragraph [0096] *<br>* figure 5 * | 1-14 | |
| A | CN 115 699 064 A (MITSUBISHI ELECTRIC CORP) 3 February 2023 (2023-02-03)<br>* the whole document * | 1-14 | |

TECHNICAL FIELDS SEARCHED (IPC)

G06Q

The present search report has been drawn up for all claims

| Place of search | Date of completion of the search | Examiner |
|---|---|---|
| Munich | 1 March 2024 | Shivaldova, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3649

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2024

| Patent document cited in search report | | Publication date | Patent family member(s) | | Publication date |
|---|---|---|---|---|---|
| US 2023031390 | A1 | 02-02-2023 | NONE | | |
| US 2021110348 | A1 | 15-04-2021 | JP | 2021064184 A | 22-04-2021 |
| | | | US | 2021110348 A1 | 15-04-2021 |
| CN 115699064 | A | 03-02-2023 | CN | 115699064 A | 03-02-2023 |
| | | | JP | 7383152 B2 | 17-11-2023 |
| | | | JP | WO2021255901 A1 | 23-12-2021 |
| | | | US | 2023075705 A1 | 09-03-2023 |
| | | | WO | 2021255901 A1 | 23-12-2021 |

EPO FORM P0459

For more details about this annex : see Official Journal of the European Patent Office, No. 12/82

**EP 4 414 913 A1**

REFERENCES CITED IN THE DESCRIPTION

**Patent documents cited in the description**

- JP 2021018753 A